# EUROPÄISCHE PATENTANMELDUNG

(11) **EP 4 155 769 A1**
(43) Veröffentlichungstag der Anmeldung: **29.03.2023**
(21) Anmeldenummer: 21198532.0
(22) Anmeldetag: 23.09.2021
(51) Int. Cl.: G01S 13/75, G01S 7/41, G01S 13/74, G01S 13/87

(54) **RADARBASIERTE ZIELIDENTIFIKATION, POSITIONSERKENNUNG UND/ODER POSITIONIERUNG**

(71) Anmelder: 2pi-Labs GmbH, 44801 Bochum (DE)
(72) Erfinder: JAESCHKE, Timo, 45525 Hattingen (DE); KÜPPERS, Simon, 44879 Bochum (DE)
(74) Vertreter: Weyers, Christopher

(57) **Zusammenfassung**

Die vorliegende Erfindung betrifft ein Verfahren zur radarbasierten Zielidentifikation, Positionserkennung, und/oder Positionierung aufweisend folgende Schritte:
Bereitstellen eines ersten Objekts, das eine auf Basis von Resonanz-Effekten vorgegebene, über der Frequenz für die Amplitude und/oder Phase und/oder Polarisation nichtlineare Reflexions- und/oder Transmissionseigenschaft für ein Radar-Sendesignal aufweist, Bestrahlen des ersten Objekts mit einem Radar-Sendesignal, vorzugsweise mit einem FMCW- oder pulsbasierten Radar-Sendesignal, Empfang eines Radar-Empfangssignals, das an dem ersten Objekt reflektierte und/oder von dem ersten Objekt transmittierte Anteile des Radar-Sendesignals aufweist, die durch die vorgegebene, über der Frequenz für die Amplitude und/oder Phase und/oder Polarisation nichtlineare Reflexions- und/oder Transmissionseigenschaft für das Radar-Sendesignal des ersten Objekts geprägt sind, und Identifikation, Positionserkennung und/oder Positionierung des ersten Objekts durch Erkennung der durch die über der Frequenz nichtlinearen Reflexions- und/oder Transmissionseigenschaft des ersten Objekts geprägten Anteile in dem Radar-Empfangssignal.

## Beschreibung

Die vorliegende Erfindung betrifft radarbasierte Systeme. Bekannt sind radarbasierte Systeme insbesondere aus dem Flugsicherungs- und Kraftfahrzeugbereich. In diesem Zusammenhang werden Radar-Signale ausgesandt und reflektierte Signale empfangen, die wiederum ausgewertet werden und beispielsweise einen Abstand oder eine Geschwindigkeit zu ermitteln.

Die vorliegende Erfindung betrifft hingegen ganz besonders bevorzugt Radar-Systeme im oder für den Einsatz im industriellen Bereich. In diesem Zusammenhang werden Radar-Systeme beispielsweise zur Füllstandsbestimmung, Durchflussbestimmung oder zu Überwachungszwecken von Industrieanlagen bzw. Produktionsprozessen eingesetzt. Die vorliegende Erfindung findet zwar bevorzugt in entsprechenden Bereichen Verwendung, kann jedoch auch in anderen Bereichen vorteilhaft sein.

Die DE 10 2019 10 512 A1 betrifft die Lokalisierung eines Objekts mittels wellenbasierter Signale, insbesondere mittels Radar. In diesem Zusammenhang ist offenbart, dass von einem Objekt ausgehende Wellen durch mehrere unterschiedliche Empfänger empfangen und Laufzeitunterschiede bestimmt werden können, um letztendlich über Rückschlüsse auf Abstände eine Position zu identifizieren.

Weiter ist aus Flugsicherungsbereichen oder militärischen Anwendungen grundsätzlich bekannt, mittels Radar eine Identifikation durch Anlayse von Signaturen reflektierter Radarsignale zu erreichen. Beispielsweise offenbart die US 6,437,728 B1 die Zielerkennung großer Objekte wie Schiffe anhand der Auswertung einer abstandsabhängigen Amplitude, die von der äußeren Topographie des zu erkennenden Objekts abhängt.

Die Erkennung eines Objekts als Radarziel im industriellen Bereich ist, anders als die Erkennung einer Signatur eines Fahrzeugs, aufgrund der regelmäßig wenig charakteristischen äußeren Form bzw. geringen Abmessungen schwierig.

Eine objektive technische Aufgabe der vorliegenden Erfindung liegt daher darin, ein Verfahren, ein System und eine Verwendung anzugeben, wodurch die Zielidentifikation, Positionserkennung und/oder Positionierung mittels Radar auch im industriellen Bereich ermöglicht, vereinfacht und/oder verbessert wird.

Die objektive technische Aufgabe wird durch ein Verfahren gemäß Anspruch 1, ein System gemäß Anspruch 12 oder eine Verwendung gemäß Anspruch 15 gelöst. Vorteilhafte Weiterbildungen sind Gegenstand der Unteransprüche.

Ein erster Aspekt der vorliegenden Erfindung betrifft ein Verfahren zur radarbasierten Zielidentifikation, Positionserkennung und/oder Positionierung. Bei dem vorschlagsgemäßen Verfahren wird ein Objekt bereitgestellt, das eine auf Basis von Resonanz-Effekten vorgegebene, über der Frequenz für die Amplitude und/oder Phase und/oder Polarisation nichtlineare Reflexions- und/oder Transmissionseigenschaften für ein Radar-Sendesignal aufweist. Das Objekt wird mit einem Radar-Sendesignal bestrahlt, wobei es sich bevorzugt um ein FMCW- oder pulsbasiertes Radar-Sendesignal handelt.

Ferner wird ein Radar-Empfangssignal empfangen, das an dem Objekt reflektierte und/oder von dem Objekt transmittierte Anteile des Radar-Sendesignals aufweist, wobei die Anteile durch die vorgegebene, über die Frequenz für die Amplitude und/oder Phase und/oder Polarisation nichtlineare Reflexions- und/oder Transmissionseigenschaft des ersten Objekts für das Radar-Sendesignal geprägt sind.

Schließlich erfolgt eine Identifikation, Positionserkennung und/oder Positionierung des ersten Objekts durch Erkennung der Anteile in dem Radar-Empfangssignal, die durch die über der Frequenz nichtlinearen Reflexions- und/oder Transmissionseigenschaft des ersten Objekts geprägt sind.

Anstatt zu versuchen, anhand einer durch eine äußere Form des Objekts geprägten Signatur eines Radar-Signals ein Objekt zu erkennen, werden also vorschlagsgemäß Resonanz-Effekte eingesetzt, die beispielsweise über Antennen oder antennenartige Strukturen erzeugt werden können, um eine Reflexions- und Transmissionseigenschaft für das Radar-Sendesignal in charakteristischer Weise derart zu beeinflussen, dass das hierdurch geprägte Radar-Empfangssignal zur Identifikation des Objekts, zur Erkennung der Position des Objekts und/oder zur Positionierung des Objekts verwendet werden kann.

In überraschender Weise hat sich gezeigt, dass auf diese Weise eine künstlich provozierte und/oder vorbekannte bzw. vordefinierte Signatur in dem Radar-Empfangssignal erzeugt werden kann, anhand derer die Identifikation des Objekts ermöglicht wird und über die Positionserkennung letztendlich auch die Veränderung der Position des Objekts zur Positionierung. Dies wird insbesondere dadurch erreicht, dass in einem Radar-Empfangssignal differenziert werden kann zwischen Signalanteilen, die nicht von einem zu identifizierenden bzw. zu positionierenden Objekt stammen und denen, die dem zu identifizierenden bzw. zur positionierenden Objekt entspringen.

Ein weiterer, auch unabhängig realisierbarer Aspekt der vorliegenden Erfindung betrifft ein System, das vorzugsweise zur Durchführung des vorschlagsgemäßen Verfahrens, also zur radarbasierten Zielidentifikation, Positionserkennung und/oder Positionierung, ausgebildet ist.

Das System weist das Objekt auf, das die auf Basis von Resonanz-Effekten vorgegebene, über die Frequenz für die Amplitude und/oder Phase und/oder Polarisation nichtlineare Reflexions- und/oder Transmissionseigenschaft für das Radar-Sendesignal aufweist.

Ferner weist das System einen Sender zum Bestrahlen des Objekts mit dem Radar-Sendesignal und einen Empfänger zum Empfangen des Radar-Empfangssignals auf, das an dem Objekt reflektierte und/oder von dem Objekt transmittierte Anteile des Radar-Sendesignals aufweist, die durch die über der Frequenz für die Amplitude und/oder Phase und/oder Polarisation nichtlineare Reflexions- und/oder Transmissionseigenschaft geprägt sind.

Schließlich weist das System eine Auswerteeinrichtung zur Erkennung von den Anteilen des Radar-Empfangssignals, die durch die über der Frequenz für die Amplitude und/oder Phase und/oder Polarisation nichtlineare Reflexions- und/oder Transmissionseigenschaft geprägt sind, auf.

Resonanz-Effekte bzw. der Einsatz resonanter Strukturen sind auch im Radar-Kontext grundsätzlich bekannt, zumal Antennen als resonante Strukturen Teile von Radar-Sendern und -Empfängern bilden. Hingegen ist es unüblich, derartige resonante Strukturen zur Erzeugung von Resonanz-Effekten an zu identifizierenden Objekten anzuordnen oder als Teil dieser vorzusehen, wie es die vorliegende Erfindung vorschlägt.

Bei der vorliegenden Erfindung ist vorzugsweise vorgesehen, dass Resonanz-Effekte erzeugende Strukturen (resonante Strukturen) als Teil eines Objekts oder hieran angebracht zielgerichtet zur Erzeugung der über die Frequenz für die Amplitude und/oder Phase und/oder Polarisation nichtlinearen Reflexion bzw. Transmission ausgebildet und eingesetzt werden bzw. sind, ohne dabei Teil eines Radar-Sendes oder Radar-Empfängers zu bilden.

Letztendlich handelt es sich bei den resonanten Strukturen bzw. dem Objekt mit diesen vorzugsweise um Einrichtungen zur zielgerichteten Manipulation der reflektierten bzw. transmittierten Anteile des Radar-Sendesignals zwecks Aufprägen einer Information, insbesondere Identifikation, die vorgegeben oder vorbekannt sind. Diese kann eine (mehrdimensionale) Codierung sein oder dieser entsprechen.

Beispielsweise kann ein Verlauf der Amplitude, Phase und/oder Polarisation durch ein entsprechendes Reflexions- bzw. Transmissionsverhalten der resonanten Strukturen provoziert werden, der sich im Radar-Empfangssignal durch einen oder mehrere Amplitudeneinbrüche, Amplitudenüberhöhungen, Phasensprünge und/oder Polarisationsänderungen, die, beispielsweise als (binäre) Codierung oder wie ein Barcode aufgefasst, eine Identifikation ermöglichen können.

Es hat sich herausgestellt, dass auf diese Weise sehr effektiv und kostengünstig auch im industriellen Bereich eine Zielidentifikation, Positionserkennung und/oder Positionierung von Objekten ermöglicht wird oder ist.

Ein weiterer, auch unabhängig realisierbarer Aspekt der vorliegenden Erfindung betrifft eine Verwendung des vorschlagsgemäßen Systems, wobei die Reflexions- und/oder Transmissionseigenschaften mindestens eines Objekts eine codierte Frequenzabhängigkeit aufweisen und durch Erkennung der Codierung das Objekt, eine Position des Objekts und/oder die Ausrichtung des Objekts identifiziert wird bzw. werden.

Ein Objekt im Sinne der vorliegenden Erfindung ist vorzugsweise ein Gegenstand, insbesondere im industriellen Umfeld und ganz besonders bevorzugt in der Fertigung. So kann es sich um ein (in Herstellung befindliches) Produkt, ein Werkzeug, Maschinenteil o. dgl. handeln.

Resonanz-Effekte zur Vorgabe der über der Frequenz nichtlinearen Reflexions- und/oder Transmissionseigenschaft für die Amplitude und/oder Phase und/oder Polarisation sind vorzugsweise Effekte, die durch die Kombination eines kapazitiven und induktiven Verhaltens hervorgerufen werden und/oder resonanz-basierte Maxima und/oder Minima aufweisen. Insbesondere handelt es sich um Effekte, die geeignet sind, über die Frequenz variierende Absorptions- und/oder Reflexionseigenschaften für elektromagnetische Wellen in Form des Radar-Sendesignals bereitzustellen, sodass das Radar-Sendesignal über unterschiedliche Frequenzen unterschiedlich stark absorbiert bzw. reflektiert wird.

Letztendlich können die Resonanz-Effekte eine über die Frequenz variierende Absorption und/oder Reflexion des durch das Radar-Sendesignal gebildeten Felds bzw. der durch das Radar-Sendesignal gebildeten Welle bewirken, sodass in entsprechender Abhängigkeit von der Frequenz das Radar-Sendesignal unterschiedlich reflektiert bzw. transmittiert wird.

Die Funktionsweise der Resonanz-Effekte ist oder ähnelt vorzugsweise einer Lastmodulation, insbesondere auf Basis physikalischer Hintergründe der Radar-Technik und entsprechender technischer Realisierung mittels der Resonanz-Effekte.

Eine nichtlineare Reflexions- und/oder Transmissionseigenschaft im Sinne der vorliegenden Erfindung hat den Hintergrund, dass üblicherweise Objekte, insbesondere im industriellen Umfeld, eine zumindest im Wesentlichen lineare Abhängigkeit der Reflexions- und/oder Transmissionseigenschaften für Radar-Signale aufweisen. Entsprechend ermöglicht es die vorliegende Erfindung, auf Basis der Resonanz-Effekte zwischen Objekten zu differenzieren bzw. die Signatur eines bestimmten Objekts im Radar-Empfangssignal zu erkennen, zu selektieren, zu identifizieren und/oder letztendlich die Position des Objekts zu bestimmen. Die Positionsbestimmung selbst kann beispielsweise durch eine Triangulation oder sonstige Vorgehensweise mit bevorzugt mehreren Sendern für Radar-Sendesignale und/oder Empfängern für das Radar-Empfangssignal erfolgen.

Ein Radar-Sendesignal im Sinne der vorliegenden Erfindung ist vorzugsweise ein FMCW-pulsbasiertes Hochfrequenzsignal, insbesondere aufweisend Frequenzrampen.

Weitere Aspekte, Eigenschaften und Vorteile der vorliegenden Erfindung ergeben sich aus den Ansprüchen und aus der nachfolgenden Beschreibung von Ausführungsbeispielen anhand der Zeichnung. Es zeigt:
- Fig. 1: eine schematische Ansicht des vorschlagsgemäßen Systems;
- Fig. 2: eine vereinfachte, schematische Ansicht von Objekten sowie korres-pondierenden Diagrammen mit Amplitudenverläufen reflektierter bzw. transmittierter Radar-Sendesignale über der Frequenz;
- Fig. 3: ein Radar-Empfangssignal, das Anteile von an den unterschiedlichen Objekten reflektierter bzw. transmittierter Anteile des Radar-Sendesig-nals aufweist; und
- Fig. 4: schematische Diagramme von Amplituden, Phasen und Polarisationen unterschiedlicher Objekte über der Frequenz.

In den Figuren werden dieselben Bezugszeichen für dieselben oder ähnliche Teile verwendet, wobei dieselben oder ähnliche Eigenschaften und Vorteile erreicht werden können, auch wenn einer wiederholten Beschreibung abgesehen wird.

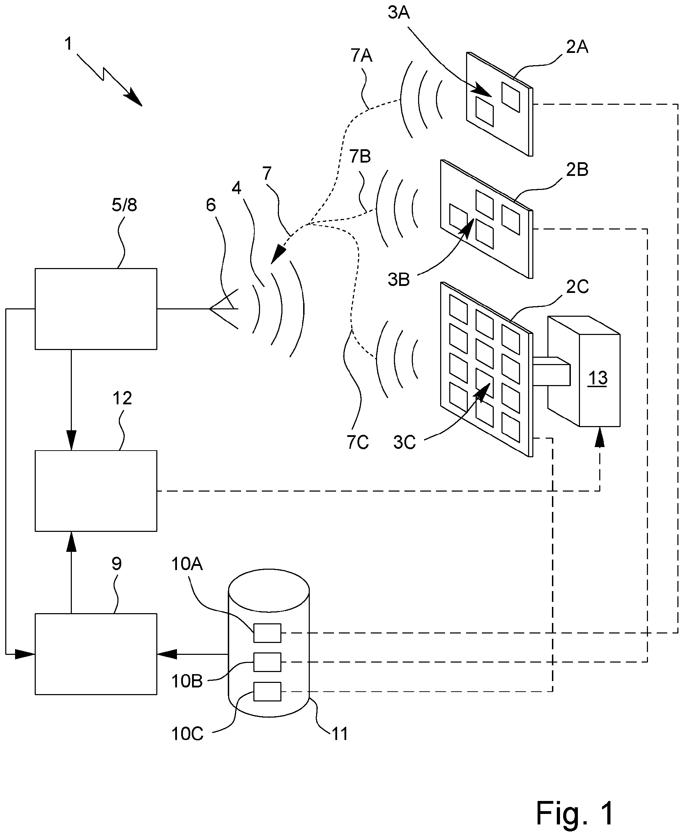

Fig. 1 zeigt in einer schematischen Ansicht ein vorschlagsgemäßes System 1 zur radarbasierten Zielidentifikation, Positionserkennung und/oder Positionierung.

Das System 1 weist mindestens ein Objekt 2A, 2B, 2C auf, im Darstellungsbeispiel drei Objekte 2A, 2B, 2C.

Das bzw. die Objekte 2A, 2B, 2C weist/weisen (jeweils) ein oder mehrere resonante Strukturen 3A, 3B, 3C auf. Die Objekte 2A, 2B, 2C bzw. resonanten Strukturen 3A, 3B, 3C weisen über der Frequenz f für die Amplitude P und/oder Phase ϕ und/oder Polarisation θ (unterschiedliche) nichtlineare Reflexions- und/oder Transmissionseigenschaften für ein Radar-Sendesignal 4 auf.

Das Radar-Sendesignal 4 kann mittels eines Radar-Senders 5 und einer diesem zugeordnete Antenne 6 abgestrahlt werden, sodass die Objekte 2A, 2B, 2C bzw. resonanten Strukturen 3A, 3B, 3C dem Radar-Sendesignal 4 ausgesetzt werden.

Ein oder mehrere, dem Radar-Sendesignal 4 ausgesetzte resonante Strukturen 3A, 3B, 3C bzw. Objekte 2A, 2B, 2C erzeugen durch Reflexion und/oder Transmission des Radar-Sendesignals 4 ein Radar-Empfangssignal 7 oder Anteile 7A, 7B, 7C hiervon, das/die resonanten Strukturen 3A, 3B, 3C, 3B, 3C durch einen Radar-Empfänger 8 empfangen und durch eine Auswerteeinrichtung 9 ausgewertet bzw. weiterverarbeitet werden kann/können.

Das Radar-Empfangssignal 7 weist durch Reflexion bzw. Transmission an einem oder mehreren der resonanten Strukturen 3A, 3B, 3C bzw. Objekte 2A, 2B, 2C die über die Frequenz nichtlineare Amplitude P und/oder Phase ϕ und/oder Polarisation θ auf, die das Radar-Empfangssignal 7 oder entsprechende Anteile 7A, 7B, 7C hiervon bilden.

Die resonante(n) Struktur(en) 3A, 3B, 3C kann/können aus einer oder mehrerer Antennen, insbesondere Patch-Antennen, gebildet sein oder diese aufweisen. Grundsätzlich sind jedoch auch andere resonante Strukturen möglich.

Das System 1 kann eine oder mehrere Signaturen 10A, 10B, 10C aufweisen, die den Verlauf der über der Frequenz variierenden Amplitude P und/oder Phase ϕ und/oder Polarisation θ eines von dem jeweiligen Objekt 2A, 2B, 2C reflektierten bzw. durch die jeweilige resonante Struktur 3A, 3B, 3C reflektierten bzw. transmittierten Anteile 7A, 7B, 7C des Radar-Sendesignals 4 entsprechen oder hierzu korrespondieren.

Die Signatur(en) 10A, 10B, 10C ermöglichen die Identifikation der reflektierten bzw. transmittierten Anteile 7A, 7B, 7C der (jeweiligen) resonanten Struktur 3A, 3B, 3C. Die Signatur(en) 10A, 10B, 10C kann/können als virtuelles Modell vorliegen und/oder als Struktur zwecks Identifikation eines oder mehrerer der Anteile 7A, 7B, 7C in dem Radar-Sendesignal 4.

Die Signatur(en) 10A, 10B, 10C kann/können in einer Datenbank 11 abgespeichert bzw. vorgehalten sein oder werden. Hier sind jedoch auch andere Lösungen möglich.

Ferner kann das System 1 eine Steuereinrichtung 12 aufweisen, die auf Basis des erkannten Anteils 7A, 7B, 7C und, vorzugsweise, einer Positionserkennung des Objekts 2A, 2B, 2C eine Positionierung des Objekts 2A, 2B, 2C mittels eines Aktuators 13 steuert bzw. dazu ausgebildet ist. Der Aktuator 13 ist hierbei mit einem Antrieb versehen, um die Position des dritten Objekts 2 relativ zu der Antenne 6 des Senders 5 bzw. Empfängers 8 zu verändern.

Im Darstellungsbeispiel ist der Sender 5 mit dem Empfänger 8 zu einem Transceiver kombiniert. Diese teilen sich vorzugsweise die Antenne 6. Die Antenne 6 kann also sowohl verwendet werden, eines oder mehrere der Objekte 2A, 2B, 2C bzw. deren resonante Struktur(en) 3A, 3B, 3C dem Radar-Sendesignal 4 auszusetzen als auch das Radar-Empfangssignal 7 bzw. deren Anteile 7A, 7B, 7C zu empfangen.

Alternativ oder zusätzlich kann jedoch der Empfänger 8 auch separat realisiert sein, eine eigene Antenne aufweisen und/oder es können mehrere Empfänger 8 vorgesehen sein, die vorzugsweise an unterschiedlichen Positionen platziert sind, um gegebenenfalls über Triangulation, Laufzeitvergleich o. dgl. eine Positionsbestimmung des (jeweiligen) Objekts 2A, 2B, 2C bzw. der (jeweiligen) resonanten Struktur 3A, 3B, 3C zu ermöglichen.

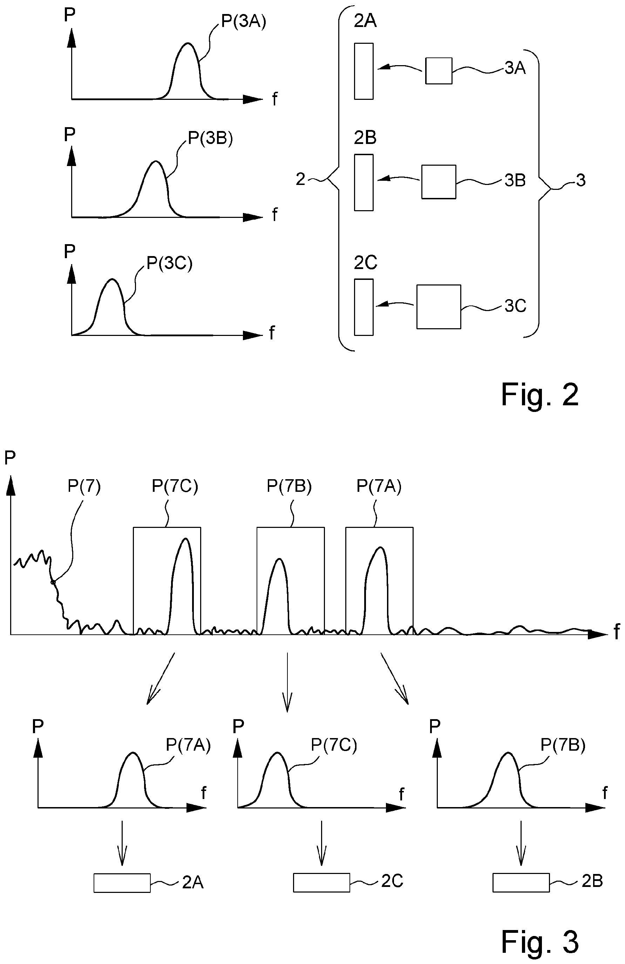

In Fig. 2 sind in einer vereinfachten schematischen Ansicht ein oder mehrere Objekte 2A, 2B, 2C, hierzu korrespondierende oder hieran angeordnete resonante Struktur(en) 3A, 3B, 3C und wiederum hierzu korrespondierende Diagramme abgebildet, die durch die jeweils bevorzugt unterschiedlichen nichtlinearen Reflexions- und/oder Transmissionseigenschaft für das Radar-Sendesignal 4 der jeweiligen resonanten Struktur 3A, 3B, 3C geprägte Anteile stark vereinfacht schematisch über der Frequenz f darstellen.

In diesem Beispiel sind die jeweilige resonante Struktur 3A, 3B, 3C dazu ausgebildet, bei unterschiedlichen Frequenzen feinen nichtlinearen Amplituden-Peak oder hierzu korrespondierenden bzw. komplementären Amplituden-Dips im von dem jeweiligen Objekt 2A, 2B, 2C reflektierten und/oder von dem jeweiligen Objekt 2A, 2B, 2C transmittierten Anteil 7A, 7B, 7C des Radar-Sendesignals 4 zu bewirken.

Im Darstellungsbeispiel gemäß Fig. 2 sind die Peaks zur Veranschaulichungszwecken im Vergleich zum dargestellten Frequenzbereich breit ausgeführt. Grundsätzlich können Peaks (Erhöhungen) und/oder Dips (Einbrüche) der Amplitude und/oder korrespondierende Phasen und/oder Polarisationsänderungen bzw. -Sprünge schmalbandig sein. Schmalbanding sind diese insbesondere, wenn sie in Bezug auf die Bandbreite des Radar-Sendesignals 4 einen Frequenzbereich von weniger als 20 %, weiter bevorzugt weniger als 10 %, insbesondere weniger als 5 %, einnimmt/einnehmen.

Bilden mehrere, insbesondere die unterschiedlichen Objekte 2A, 2B, 2C, Teil des gemeinsamen Systems 1, wie in Fig. 1 dargestellt, werden sie gemeinsam dem Radar-Sendesignal 4 ausgesetzt und reflektieren oder transmittieren damit im Ergebnis eine Überlagerung der in Fig. 2 dargestellten Amplitudenverläufe, gegebenenfalls zusätzlich zu Anteilen anderer Gegenstände oder Rauschen, wie im oberen Diagramm in Fig. 3 dargestellt.

Beispielsweise kann auf Basis des Radar-Empfangssignals 7 ein erstes der Objekte 2A, 2B, 2C identifiziert und/oder seine Position erkannt oder das erste der Objekt 2A, 2B, 2C positioniert werden. Hierzu wird vorzugsweise das Radar-Empfangssignal 7 bzw. dessen Amplitude p, wie in Fig. 3 oben dargestellt, alternativ oder ergänzend die korrespondierende Phase ϕ und/oder Polarisation θ, ausgewertet, wodurch auf das jeweilige Objekt 2A, 2B, 2C bzw. deren resonante Struktur 3A, 3B, 3C zurückzuführende Anteile 7A, 7B, 7C identifiziert werden können. Auf Basis der identifizierten Anteile 7A, 7B, 7C kann dann zurückgeschlossen werden auf die Identifikation, Position bzw. (notwendige) Positionsänderung des ersten der Objekte 2A, 2B, 2C. Alternativ oder zusätzlich kann Entsprechendes mit anderen, im Beispiel einem zweiten und/oder einem dritten der Objekte 2A, 2B, 2C erfolgen.

Grundsätzlich kann also lediglich ein erstes der Objekte 2A, 2B, 2C vorgesehen sein, das auf Basis von Resonanz-Effekten eine vorgegebene bzw. vordefinierte, über der Frequenz f nichtlineare Reflexions- und/oder Transmissionseigenschaft für das Radar-Sendesignal 4, besonders bevorzugt bezüglich der Amplitude P und/oder Phase ϕ und/oder Polarisation θ aufweist. In diesem Fall weist das Radar-Empfangssignal 7 nur einen der Anteile 7A, 7B, 7C auf, der von der ersten resonanten Struktur 3A des ersten Objekts 2A reflektiert oder transmittiert wird.

Das erste der Objekte 2A, 2B, 2C kann entsprechend identifiziert, seine Position erkannt und/oder positioniert werden. Dies kann dadurch erfolgen, dass durch die über der Frequenz f nichtlineare Reflexions- und/oder Transmissionseigenschaft des ersten der Objekte 2A, 2B, 2C in dem Radar-Empfangssignal 7 erkannt werden.

Ferner ist es möglich, mehrere Objekte 2A, 2B, 2C vorzusehen und einen oder mehrere der Anteile 7A, 7B, 7C im Radar-Empfangssignal 7 zu erkennen, indem die entsprechend geprägten Anteile 7A, 7B, 7C durch Analyse des Radar-Empfangssignals 7 identifiziert werden.

Das Radar-Empfangssignal 7 wird vorzugsweise auf Ähnlichkeit mit der vorbekannten Signatur 10A, 10B, 10C untersucht. Die Signatur 10A, 10B, 10C kann in diesem Zusammenhang grundsätzlich ein Verlauf zur Korrelation bzw. sonstigen Bestimmung einer Ähnlichkeit sein oder aufweisen. Alternativ oder zusätzlich kann die Signatur 10A, 10B, 10C jedoch eine Aggregation oder sonstige Struktur, insbesondere KI-basierte Struktur, sein oder aufweisen, die eine entsprechende Untersuchung des Radar-Empfangssignals 7 auf Ähnlichkeit mit der Signatur 10A, 10B, 10C ermöglicht.

Die Signatur 10A, 10B, 10C repräsentiert hierbei vorzugsweise die über der Frequenz f für die Amplitude P und/oder Phase ϕ und/oder Polarisation θ nichtlineare Reflexions- und/oder Transmissionseigenschaft für das Radar-Sendesignal 4 des ersten Objekts 2A, 2B, 2C bzw. weiteren, zweiten Objekts 2A, 2B, 2C und/oder dritten Objekts 2A, 2B, 2C bzw. korrespondierender resonanter Strukturen 3A, 3B, 3C

Die Untersuchung auf Ähnlichkeit der Signatur 10A, 10B, 10C und des Radar-Empfangssignals 7 kann durch Korrelation und/oder machine-learning-basierte Verfahren erfolgen, vorzugsweise entsprechend der Form, in der die Signatur 10A, 10B, 10C vorliegt.

Die vorbekannte Signatur 10A, 10B, 10C kann mittels eines analytischen Modells aus physikalischen Eigenschaften eines bekannten Objekts abgeleitet sein. Alternativ oder zusätzlich kann die Signatur 10A, 10B, 10C aus erwarteten physikalischen Eigenschaften eines unbekannten Objekts 2A, 2B, 2C abgeleitet sein oder werden. Es ist also nicht zwingend notwendig, dass die Eigenschaften der resonanten Struktur 3A, 3B, 3C im Vorhinein messtechnisch charakterisiert werden, da eine Modellierung und/oder Simulation der Resonanz-Effekte und hieraus hervorgehenden nichtlinearen Reflexions- und/oder Transmissionseigenschaften für das Radar-Sendesignal 4 bezüglich der Amplitude P und/oder Phase ϕ und/oder Polarisation θ über die Frequenz f anderweitig bestimmt, insbesondere simuliert oder durch Modellbildung erzeugt werden kann/können.

Besonders bevorzugt wird das Objekt 2A, 2B, 2C als "digitaler Zwilling" der physikalischen Eigenschaften des Objekts 2A, 2B, 2C bzw. resonanten Struktur 3A, 3B, 3C, die das (jeweilige) Objekt 2A, 2B, 2C aufweist, modelliert. Das Modell kann anhand des Radar-Empfangssignals 7 aktualisiert werden. Somit kann das Modell des Objekts 2A, 2B, 2C bzw. der resonanten Struktur 3A, 3B, 3C der Realität angenähert werden. Mittels des an die Realität angenäherten Modells wiederum können bevorzugt physikalische Eigenschaften des Objekts 2A, 2B, 2C abgeleitet bzw. hiermit bestimmt werden. Bei der physikalischen Eigenschaft handelt es sich insbesondere um eine Position, eine Ausrichtung, einen Aspektwinkel, eine Erstreckung, sonstige geometrische Eigenschaft o. dgl.

Es ist möglich, eine Kenngröße repräsentierend die Korrelation zwischen dem Radar-Empfangssignal 7 oder einer hiervon abgeleiteten Größe und der Signatur 10A, 10B, 10C zu ermitteln und (vorzugsweise) über die Kenngröße die physikalische Eigenschaft des Objekts 2A, 2B, 2C abzuleiten und/oder das Objekt 2A, 2B, 2C zu identifizieren bzw. einen Grad der Übereinstimmung des Modells mit der Realität zu bestimmen.

Wie in Fig. 3 angedeutet, kann die Position eines ersten Objekts 2A, zweiten Objekts 2B und/oder dritten Objekts 2C bzw. weiteren Objekts dadurch erfolgen, dass aus dem Radar-Empfangssignal 7 der jeweilige Anteil 7A, 7B, 7C identifiziert bzw. extrahiert wird, der auf der jeweiligen resonanten Struktur 3A, 3B, 3C resultiert.

Grundsätzlich kann das Radar-Empfangssignal 7 durch den einen Radar-Empfänger 8 empfangen und mittels der Auswerteeinrichtung 9 ausgewertet werden. Bevorzugt ist hingegen der Einsatz mehrerer Empfänger 8 und gemeinsame Auswertung des an unterschiedlichen Positionen der jeweiligen Empfänger 8 empfangenen Radar-Empfangssignals 7. Hierbei kann beispielsweise eine Triangulation zur Positionsbestimmung erfolgen.

Das (jeweilige) Objekt 2A, 2B, 2C kann nach Bestimmung seiner Position in Richtung einer Zielposition bewegt werden. Im Darstellungsbeispiel gemäß Fig. 1 kann dies mittels des Aktuators 13 erfolgen. Dieser kann mit der Steuereinrichtung 12 derart gesteuert werden, dass eine Distanz zwischen der Zielposition und der aktuellen Position des (jeweiligen) Objekts 2A, 2B, 2C reduziert oder eliminiert wird, das Objekt 2A, 2B, 2C der Zielposition also bevorzugt iterativ angenähert wird.

Das Objekt 2A, 2B, 2C bzw. dessen resonante Struktur 3A, 3B, 3C kann während der Bewegung überwacht, verfolgt bzw. "getrackt" werden. Dies ist jedoch nicht zwingend notwendig kontinuierlich, wenn auch bevorzugt.

Dem Objekt 2A, 2B, 2C oder eine Lage bzw. Ausrichtung des Objekts 2A, 2B, 2C kann identifiziert werden. Dies erfolgt vorzugsweise auf Basis der Erkennung des Anteils 7A, 7B, 7C des Radar-Empfangssignals 7, der von der über der Frequenz f nichtlinearen Reflexions- und/oder Transmissionseigenschaft des Objekts 2A, 2B, 2C geprägt ist.

Dem Objekt 2A, 2B, 2C kann auf diese Weise ein Identifikator zugeordnet sein oder werden. Insbesondere wird oder ist das Objekt 2A, 2B, 2C mit dem Identifikator gekennzeichnet. Beispielsweise kann das Objekt 2A, 2B, 2C in einer graphischen bzw. räumlichen Darstellung mit dem Identifikator gekennzeichnet sein oder werden.

Der Identifikator kann Koordinaten aufweisen oder hierdurch gebildet sein, die die Position des Objekts repräsentieren. Alternativ oder zusätzlich kann der Identifikator eine Ausrichtungsgröße sein oder aufweisen, die eine Ausrichtung, insbesondere Rotation und/oder Neigung, des Objekts 2A, 2B, 2C repräsentiert.

Eine Zielerfassung und/oder Zielführung kann auf Basis des Identifikators oder der Koordinaten erfolgen. Hier sind jedoch auch andere Lösungen denkbar.

Grundsätzlich kann ein (dasselbe) Objekt 2A, 2B, 2C auch mehrere, unterschiedliche resonante Strukturen 3A, 3B, 3C aufweisen. Hierdurch können unterschiedliche Positionen bzw. Orte an dem Objekt 2A, 2B, 2C identifiziert bzw. differenziert werden. Weiter können vorzugsweise die Positionen der resonanten Strukturen 3A, 3B, 3C identifiziert und hierdurch beispielsweise eine Lage im Raum bzw. Ausrichtung, ein Aspektwinkel o. dgl. bestimmt werden.

Das Verkippen oder eine Neigung eines der Objekte 2A, 2B, 2C kann Alternativ oder zusätzlich durch eine Aspektwinkel-abhängige Änderung der Reflexions- bzw. Transmissionseigenschaft, durch resonante Strukturen 3A, 3B, 3C an unterschiedlichen Positionen desselben Objekts 2A, 2B, 2C oder durch eine Kombination dieser Maßnahmen detektiert werden oder detektierbar sein.

Insbesondere kann dasselbe Objekt 2A, 2B, 2C mehrere resonante Strukturen 3A, 3B, 3C aufweisen, die untereinander (starr) mechanisch verbunden und, vorzugsweise, durch Nichtlinearitäten oder Anomalien in bevorzugt unterschiedlichen Frequenzbereichen voneinander unterscheidbar sein können bzw. unterschieden werden.

Darüber hinaus ist es möglich, dass dasselbe Objekt 2A, 2B, 2C zueinander bewegliche Komponenten aufweist, die jeweils eine resonante Struktur 3A, 3B, 3C aufweisen und deren Lage relativ zueinander entsprechend detektierbar sein kann. Auf diese oder sonstige Weise kann abgesehen von einer Position und/oder Neigung eines Objekts 2A, 2B, 2C ein (veränderter) Zustand des Objekts 2A, 2B, 2C detektiert werden bzw. bestimmbar sein.

Für die Auswertung des Radar-Empfangssignals 7 kann von dem Radar-Empfangssignal 7 oder Teilen, insbesondere Frequenzbereichsabschnitten, hiervon eine Transformation erzeugt werden, insbesondere eine Fouriertransformation. Hierdurch oder auf sonstige Weise kann ein komplexes Signal mit Anteilen für den Betrag/die Amplitude P und/oder die Polarisation θ und/oder die Phase ϕ erzeugt werden. Ein solches Signal kann für die unterschiedlichen Objekte 2A, 2B, 2C bzw. für unterschiedliche resonante Strukturen 3A, 3B, 3C unterschiedlich und/oder charakteristisch sein.

Eine oder mehrere der resonanten Struktur(en) 3A, 3B, 3C können von der Ausrichtung bzw. einem Aspektwinkel des Objekts 2A, 2B, 2C bzw. seiner resonanten Struktur(en) 3A, 3B, 3C in Abhängigkeit von der Frequenz f unterschiedlich variierende Eigenschaften zur Reflexion und/oder Transmission des Radar-Sendesignals 4 aufweisen. Hierdurch kann alternativ oder zusätzlich zur Identifikation des Objekts 2A, 2B, 2C bzw. seiner resonanten Struktur 7A, 7B, 7C im Radar-Empfangssignal 7 oder der Positionserkennung oder Positionierung auf dieser Basis eine Neigungs- bzw. Rotationserkennung und/oder diesbezügliche Positionierung erfolgen.

Die resonante(n) Struktur(en) 7A, 7B, 7C kann/können eine oder mehrere Antennen, insbesondere Patch-Antennen und/oder Antennen mit frequenzabhängig variierender Anpassung und/oder Polarisation aufweisen, wie in Fig. 1 angedeutet.

Es kann vorgesehen sein, dass die resonante(n) Struktur(en) 7A, 7B, 7C bzw. die dadurch gebildeten frequenzabhängigen Verläufe des Radar-Empfangssignals 7 Rückschlüsse auf geometrische Abmessungen oder sonstige physikalische Parameter des Objekts 2A, 2B, 2C zu ermöglichen oder hierfür genutzt werden. Weiter ist es möglich, dass auf dieser Basis ein physikalischer Wert als Messgröße abgeleitet wird.

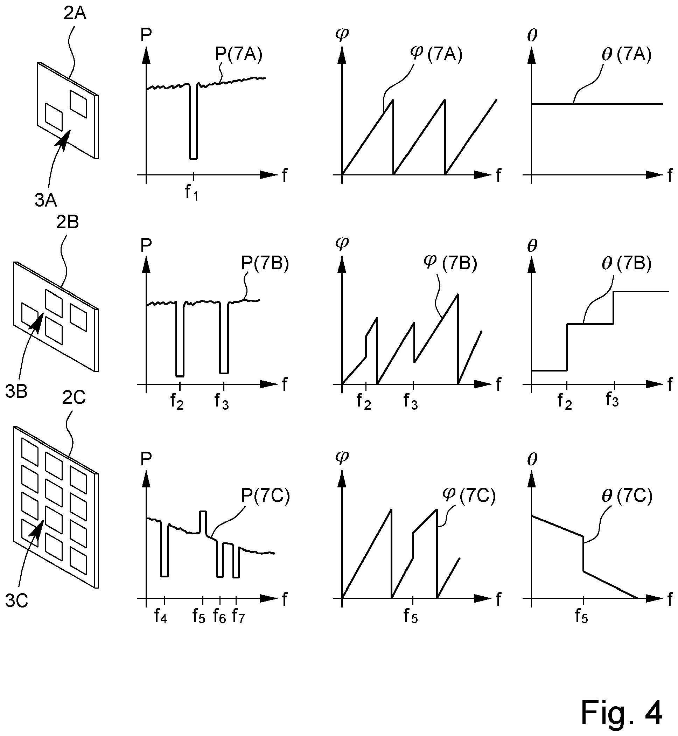

Fig. 4 zeigt in einem alternativen Ausführungsbeispiel exemplarische Verläufe von Amplitude P, Phase ϕ und Polarisation θ von bevorzugt komplexeren resonanten Strukturen 3A, 3B, 3C.

Die Reflexions- und/oder Transmissionseigenschaft kann codiert sein oder einen Code aufweisen oder bilden. Dieser Code kann in dem Radar-Empfangssignal 7 als Anteil 7A, 7B, 7C des Radar-Empfangssignals 7 der jeweiligen Resonanzstruktur 7A, 7B, 7C identifiziert werden. Die (komplexere) Codierung ermöglicht eine verbesserte und/oder robustere Identifikation der jeweiligen resonanten Struktur 3A, 3B, 3C bzw. des zugeordneten jeweiligen Objekts 2A, 2B, 2C.

Insbesondere kann die Codierung über eine Abfolge von (mehreren, insbesondere mindestens zwei oder mehr als zwei) bevorzugt lokal begrenzten bzw. schmalbandigen Peaks (Überhöhungen), Dips (Einbrüchen) und/oder Änderungen/Sprüngen (der Amplitude, Phase und/oder Polarisation) erfolgen. Hierdurch kann die Reflexions- und/oder Transmissionseigenschaft der (jeweiligen) resonanten Struktur 3A, 3B, 3C - bevorzugt binär - codiert sein oder werden.

Alternativ oder zusätzlich kann eine multi-dimensionale Codierung erfolgen. Hierzu können mindestens zwei der Größen Amplitude P, Phase ϕ und/oder Polarisation θ Codierungen aufweisen. Diese können einander (teilweise) entsprechen oder sich ergänzen und die Auswertung der unterschiedlichen Größen (Amplitude P, Phase ϕ und/oder Polarisation θ) kann in Kombination eine Erkennungssicherheit der jeweiligen resonanten Struktur 3A, 3B, 3C bzw. der hierzu korrespondierenden Objekte 2A, 2B, 2C maßgeblich verbessern.

In Fig. 4 ist im Beispiel für das erste Objekt 2A mit der ersten resonanten Struktur 3A gezeigt, dessen Reflexions- und/oder Transmissionseigenschaften für das Radar-Sendesignal 4, dazu führt, dass die Amplitude P(7A) des Anteils 7A der ersten resonanten Struktur 3A einen Einbruch (Amplituden-Dip) bei der Frequenz f₁ aufweist. Die Phase ϕ(7A) und/oder Polarisation θ(7A) sind hiervon zumindest im Wesentlichen unberührt. In diesem Beispielfall ist die Codierung eindimensional, betrifft also nur die Amplitude P bzw. eine der Größen Amplitude P, Phase ϕ und Polarisation θ.

Im Beispiel des zweiten Objekts 2B gemäß Fig. 4 weist die Amplitude P(7B) des Anteils 7B der zweiten resonanten Struktur 3B an zwei Frequenzen f₂, f₃ Einbrüche auf. Alternativ oder zusätzlich weist die Phase ϕ(7B) des Anteils 7B der zweiten resonanten Struktur 3B an bevorzugt entsprechenden Frequenzen f₂, f₃ eine oder mehrere Phasensprünge auf. Alternativ oder zusätzlich ist die zweite resonante Struktur 3B in diesem Ausführungsbeispiel dazu ausgebildet, insbesondere an entsprechenden Frequenzen f₂, f₃, die Polarisation θ des reflektierten und/oder transmittierten Anteils 7B, insbesondere bei entsprechenden Frequenzen f₂, f₃, zu ändern.

Zwei oder mehr der Größen Amplitude P, Phase ϕ und/oder Polarisation θ kann/können (in Kombination) verwendet werden, um die radarbasierte Zielidentifikation, Positionserkennung und/oder Positionierung des zweiten Objekts 2B zu bewirken.

Schließlich ist in Fig. 4 für das dritte Objekt 2C der durch Transmission bzw. Reflexion an der dritten resonanten Struktur 3C hervorrufbare oder hervorgerufene Anteil 7C des Radar-Empfangssignals 7 dargestellt.

Die dritte resonante Struktur 3C des dritten Objekts 3C ist vorzugsweise, insbesondere über mehr und/oder unterschiedliche Antennen bzw. Patch-Antennenelemente, dazu ausgebildet, vorliegend bei den Frequenzen f₄, f₅, f₆ und/oder f₇ identifizierbare Änderungen im Verlauf, insbesondere der Amplitude P, zu bewirken. Hierbei handelt es sich bei den Frequenzen f₄, f₆ und f₇ um Amplitudeneinbrüche, während an der Frequenz f₅ eine Amplituden-Überhöhung realisiert ist.

Die nichtlineare Reflexions- und/oder Transmissionseigenschaften kann/können grundsätzlich durch Antennenelemente erfolgen, die mittels entsprechender Anpassung empfangene Energie in Wärme wandeln oder reflektieren. Hier sind auch andere Lösungen zur Erzeugung entsprechender oder ähnlicher oder anderer Resonanz-Effekte denkbar.

Optional weist der Phasenverlauf cp(7C) der dritten resonanten Struktur 3C im vorliegenden Ausführungsbeispiel an der Frequenz f₅ einen Phasensprung und/oder die Polarisation θ(7C) einen Polarisationssprung auf. Alternativ oder zusätzlich zu Sprüngen können auch sonstige Anomalien der Phase ϕ(7C) und/oder Polarisation θ(7C) erzeugt werden, die lokal begrenzt sein können.

Unterschiedliche Aspekte der vorliegenden Erfindung sind miteinander kombinierbar und können synergistische Effekte bewirken, auch wenn dies nicht explizit erwähnt ist.

### Bezugszeichenliste:

- 1: System
- 2A: Erstes Objekt
- 2B: Zweites Objekt
- 2C: Drittes Objekt
- 3A: Erste resonante Struktur
- 3B: Zweite resonante Struktur
- 3C: Dritte resonante Struktur
- 4: Radar-Sendesignal
- 5: Sender
- 6: Antenne
- 7: Radar-Empfangssignal
- 7A: Anteil der ersten resonanten Struktur
- 7B: Anteil der zweiten resonanten Struktur
- 7C: Anteil der dritten resonanten Struktur
- 8: Empfänger
- 9: Auswerteeinrichtung
- 10: Signatur
- 11: Datenbank
- 12: Steuereinrichtung
- 13: Aktuator

- f: Frequenz
- P: Amplitude
- P(7): Amplitude Radar-Empfangssignal
- P(7A): Amplitude des Anteils der ersten resonanten Struktur
- P(7B): Amplitude des Anteils der zweiten resonanten Struktur
- P(7C): Amplitude des Anteils der dritten resonanten Struktur
- ϕ: Phase
- ϕ(7A): Phase des Anteils der ersten resonanten Struktur
- ϕ(7B): Phase des Anteils der zweiten resonanten Struktur
- ϕ(7C): Phase des Anteils der dritten resonanten Struktur
- θ: Polarisation
- θ(7A): Polarisation des Anteils der ersten resonanten Struktur
- θ(7B): Polarisation des Anteils der zweiten resonanten Struktur
- θ(7C): Polarisation des Anteils der dritten resonanten Struktur

## Patentansprüche

1. Verfahren zur radarbasierten Zielidentifikation, Positionserkennung, und/oder Positionierung aufweisend folgende Schritte:
Bereitstellen eines Objekts (2A, 2B, 2C), das eine auf Basis von Resonanz-Effekten vorgegebene, über der Frequenz (f) für die Amplitude (P) und/oder Phase (ϕ) und/ oder Polarisation (θ) nichtlineare Reflexions- und/oder Transmissionseigenschaft für ein Radar-Sendesignal (4) aufweist,
Bestrahlen des Objekts (2A, 2B, 2C) mit einem Radar-Sendesignal (4), vorzugsweise mit einem FMCW- oder pulsbasierten Radar-Sendesignal (4),
Empfang eines Radar-Empfangssignals (7), das an dem ersten Objekt (2A) reflektierte und/oder von dem ersten Objekt (2A) transmittierte Anteile (7A, 7B, 7C) des Radar-Sendesignals (4) aufweist, die durch die vorgegebene, über der Frequenz (f) für die Amplitude (P) und/oder Phase (ϕ) und/oder Polarisation (θ) nichtlineare Reflexions- und/oder Transmissionseigenschaft für das Radar-Sendesignal (4) des Objekts (2A, 2B, 2C) geprägt ist/sind, und
Identifikation, Positionserkennung und/oder Positionierung des Objekts (2A, 2B, 2C) durch Erkennung der durch die über der Frequenz (f) nichtlinearen Reflexions- und/oder Transmissionseigenschaft des Objekts (2A, 2B, 2C) geprägten Anteile (7A, 7B, 7C) in dem Radar-Empfangssignal (7).

2. Verfahren nach Anspruch 1, **dadurch gekennzeichnet, dass** das Verfahren ferner aufweist:
Bereitstellen eines unterschiedlichen zweiten Objekts (2A, 2B, 2C), das eine andere auf Basis von Resonanz-Effekten vorgegebene über der Frequenz (f) für die Amplitude (P) und/oder Phase (ϕ) und/oder Polarisation (θ) nichtlineare Reflexions- und/oder Transmissionseigenschaft für das Radar-Sendesignal (4) aufweist,
Bestrahlen des zweiten Objekts (2B) mit dem Radar-Sendesignal (4),
Empfang des Radar-Empfangssignals (7), das von an dem zweiten Objekt (2A, 2B, 2C) reflektierte und/oder von dem zweiten Objekt (2B) transmittierte Anteile (7A, 7B, 7C) des Radar-Sendesignals (7) aufweist, die durch die vorgegebene, über der Frequenz (f) für die Amplitude (P) und/oder Phase (ϕ) nichtlineare Reflexions- und/oder Transmissionseigenschaft für das Radar-Sendesignal (4) des zweiten Objekts (2A, 2B, 2C) geprägt sind, und
Positionserkennung, Positionierung und/oder Identifikation des zweiten Objekts (2A, 2B, 2C) durch Erkennung der über der Frequenz (f) nichtlinearen Reflexions- und/oder Transmissionseigenschaft des zweiten Objekts (2A, 2B, 2C) geprägten Anteile (7A, 7B, 7C) in dem Radar-Empfangssignal (7); und/oder
Positionserkennung, Positionierung und/oder Identifikation des Objekts (2A, 2B, 2C) durch Erkennung der durch die über der Frequenz (f) nichtlineare Reflexions- und/oder Transmissionseigenschaft des Objekts (2A, 2B, 2C) geprägten Anteile (7A, 7B, 7C) in dem Radar-Empfangssignal (7) unter Unterscheidung von den oder Ausblenden der Anteile (7A, 7B, 7C) des Radar-Empfangssignals (7), die durch die über der Frequenz (f) nichtlinearen Reflexions- und/oder Transmissionseigenschaft des zweiten Objekts (2A, 2B, 2C) geprägt sind.

3. Verfahren nach Anspruch 1 oder 2, **dadurch gekennzeichnet, dass** das Verfahren ferner aufweist:
Untersuchung des Radar-Empfangssignals (7) auf Ähnlichkeit mit einer vorbekannten Signatur(10A, 10B, 10C), die die über der Frequenz (f) für die Amplitude (P) und/oder Phase (ϕ) und/oder Polarisation (θ) nichtlineare Reflexions- und/oder Transmissionseigenschaft für das Radar-Sendesignal (4) des Objekts (2A, 2B, 2C) und/oder zweiten Objekts (2A, 2B, 2C) repräsentiert, vorzugweise durch Untersuchung einer Ähnlichkeit der Signatur (10A, 10B, 10C) und des Radar-Empfangssignals (7), insbesondere durch Korrelation und/oder ein machine-learning-basiertes Verfahren.

4. Verfahren nach Anspruch 3, **dadurch gekennzeichnet, dass** die vorbekannte Signatur (10A, 10B, 10C) mittels eines analytischen Modells aus den physikalischen Eigenschaften des bekannten Objekts (2A, 2B, 2C) und/oder aus den erwarteten physikalischen Eigenschaften eines unbekannten Objekts (2A, 2B, 2C) abgeleitet wird oder ist.

5. Verfahren nach Anspruch 3, **dadurch gekennzeichnet, dass** das Objekt (2A, 2B, 2C) als digitaler Zwilling der physikalischen Eigenschaften des Objekts (2A, 2B, 2C) modelliert wird und das Modell anhand des Radar-Empfangssignals (7) aktualisiert wird.

6. Verfahren nach einem der voranstehenden Ansprüche, **dadurch gekennzeichnet, dass** die Position des Objekts (2A, 2B, 2C) erkannt wird, vorzugsweise wobei das Objekt (2A, 2B, 2C) zu einer Zielposition bewegt wird, insbesondere wobei während der Bewegung die Position des ersten Objekts (2A, 2B,2C) verfolgt und das Objekt (2A, 2B,2C) der Zielposition bevorzugt iterativ angenähert wird.

7. Verfahren nach einem der voranstehenden Ansprüche, **dadurch gekennzeichnet, dass** das Objekt (2A, 2B, 2C) oder eine Lage bzw. Ausrichtung des Objekts (2A, 2B, 2C) identifiziert wird, vorzugsweise wobei auf Basis einer Erkennung des Anteils (7A, 7B, 7C) des Radar-Empfangssignals (7), der von der über der Frequenz (f) nichtlinearen Reflexions- und/ oder Transmissionseigenschaft des Objekts (2A, 2B, 2C) geprägt ist, dem Objekt (2) ein Identifikator zugeordnet wird, insbesondere wobei das Objekt (2) mit dem Identifikator gekennzeichnet wird oder ist, weiter insbesondere in einer graphischen Darstellung.

8. Verfahren nach Anspruch 7, **dadurch gekennzeichnet, dass** der Identifikator Koordinaten aufweist, die die Position des Objekts (2) repräsentieren, eine Ausrichtungsgröße, die die Ausrichtung, insbesondere Rotation bzw. Neigung, des Objekts (2) repräsentiert, und/oder dass eine Zielerfassung und/oder eine Zielführung auf Basis des Identifikators oder der Koordinaten erfolgt.

9. Verfahren nach einem der voranstehenden Ansprüche, **dadurch gekennzeichnet, dass** die über die Frequenz (f) nichtlinearen Reflexions- und/oder Transmissionseigenschaft durch eine oder mehrere resonante Strukturen (3A, 3B, 3C) gebildet ist, vorzugsweise wobei die nichtlineare Reflexions- und/oder Transmissionseigenschaft von der Ausrichtung des Objekts (2A, 2B, 2C) bzw. seiner resonanten Struktur (3A, 3B, 3C) in Abhängigkeit von der Frequenz (f) unterschiedlich variierende Eigenschaften zur Reflexion und/oder Transmission des Radar-Sendesignals (4) aufweist/aufweisen.

10. Verfahren nach Anspruch 9, **dadurch gekennzeichnet, dass** die resonanten Strukturen (3A, 3B, 3C) eine oder mehrere Antennen, insbesondere Patch-Antennen und/oder mit frequenzabhängig variierender Anpassung und/oder Polarisation, aufweisen; und/oder
dass der durch die resonanten Strukturen (3A, 3B, 3C) gebildete frequenzabhängige Verlauf des Radar-Empfangssignals (7) für Rückschlüsse auf geometrische Abmessungen oder physikalische Parameter des Objekts (2A, 2B, 2C) und/oder auf mindestens einen physikalischen Wert als Messgröße genutzt wird.

11. Verfahren nach einem der voranstehenden Ansprüche, **dadurch gekennzeichnet, dass** die Reflexions- und/oder Transmissionseigenschaft codiert ist, vorzugsweise
über eine Abfolge von bevorzugt lokal begrenzten bzw. schmalbandigen Überhöhungen, Einbrüchen oder Änderungen - insbesondere wodurch die Reflexions- und/oder Transmissionseigenschaft binär codiert ist, und/oder
über die bevorzugt multi-dimensionale Kodierung der Resonanz-Effekte zur Bildung mindestens einer signifikanten Stelle im Frequenzbereich in Bezug auf Betrag und/ oder Phase (ϕ) und/oder Polarisation (θ) des Radar-Empfangssignals (7).

12. System (1) zur radarbasierten Zielidentifikation, Positionserkennung, und/oder Positionierung, das vorzugsweise zur Durchführung eines Verfahrens nach einem der voranstehenden Ansprüche ausgebildet ist, aufweisend
ein Objekt (2A, 2B, 2C), das eine auf Basis von Resonanz-Effekten vorgegebene, über der Frequenz (f) für die Amplitude (P) und/oder Phase (ϕ) und/oder Polarisation (θ) nichtlineare Reflexions- und/oder Transmissionseigenschaft für ein Radar-Sendesignal (4) aufweist,
einen Sender (5) zum Bestrahlen des Objekts (2A, 2B, 2C) mit dem Radar-Sendesignal (4),
einen Empfänger (8) zum Empfang eines Radar-Empfangssignals (7), das an dem Objekt (2A, 2B, 2C) reflektierte und/oder von dem Objekt (2A, 2B, 2C) transmittierte Anteile (7A, 7B, 7C) des Radar-Sendesignals (4) aufweist, die durch die über der Frequenz (f) für die Amplitude (P) und/oder Phase (ϕ) und/oder Polarisation (θ) nichtlineare Reflexions- und/oder Transmissionseigenschaft geprägt sind, und
eine Auswerteeinrichtung (9) zur Erkennung von den Anteilen (7A, 7B, 7C) des Radar-Empfangssignals (7), die durch die über der Frequenz (f) für die Amplitude (P) und/oder Phase (ϕ) und/oder Polarisation (θ) nichtlineare Reflexions- und/oder Transmissionseigenschaft geprägt sind.

13. System nach Anspruch 12, **dadurch gekennzeichnet, dass** die nichtlinearen Reflexions- und/oder Transmissionseigenschaft durch eine oder mehrere resonante Strukturen (3A, 3B, 3C) gebildet ist, die im Frequenzbereich des Radar-Sendesignals (4) in Abhängigkeit von der Frequenz (f) variierende Eigenschaften zur Reflexion und/oder Absorption und oder Polarisationsänderung (θ) des Radar-Sendesignals (4) aufweist/aufweisen;
vorzugsweise wobei das Objekt (2A, 2B, 2C) eine resonante Struktur (3A, 3B, 3C, 3B, 3C) aufweist, insbesondere eine oder mehrere Antennen, die dazu ausgebildet und/oder beschaltet ist/sind, dass sie bei Reflexion oder Transmission des Radar-Sendesignals (4) Anteile des Radar-Empfangssignals (7) das Radar-Sendesignal (4) modulieren, indem sie dem Radar-Sendesignal (4) über die Frequenz (f) des Radar-Sendesignals (4) variierende Reflexions-, Transmissions-, Polarisations- und/oder Phasendrehungseigenschaften aufprägen, die vorbekannt und von sonstigen Anteilen des Radar-Empfangssignals (7) unterscheidbar sind.

14. System nach einem der Ansprüche 11 bis 13, **dadurch gekennzeichnet dass** es sich bei dem System (1) um ein - vorzugsweise FMCW- oder pulsbasiertes - Radarsystem:
im Anwendungsbereich der industriellen Messtechnik handelt; und/oder
als kontaktloses Messsystem im Nahbereich <100m handelt; und/oder
in einem Frequenzbereich von 100 GHz bis 1 THz handelt; und/oder
mit einer Bandbreite von > 10% der Mittenfrequenz handelt.

15. Verwendung des Systems (1) nach einem der Ansprüche 12 bis 14, **dadurch gekennzeichnet, dass** das System (1) in einem Szenario betrieben wird, in dem die Reflexions- und/oder Transmissionseigenschaften mindestens eines Objekts (2A, 2B, 2C) eine codierte Frequenzabhängigkeit aufweist und durch Erkennung der Codierung das Objekt (2A, 2B, 2C), eine Position und/oder Ausrichtung des Objekts (2A, 2B, 2C) identifiziert wird/werden.
